# EUROPÄISCHE PATENTSCHRIFT

(11) **EP 2 634 858 B1**
(45) Veröffentlichungstag und Bekanntmachung des Hinweises auf die Patenterteilung: **15.08.2018**
(21) Anmeldenummer: 13000656.2
(22) Anmeldetag: 08.02.2013
(51) Int. Cl.: G01F 23/284, H01P 1/08

(54) **Mikrowellenfenster und nach dem Radar-Prinzip arbeitendes Füllstandmesssystem**
Microwave window and fill level measuring device operating according to the radar principle
Fenêtre de micro-ondes et système de mesure du niveau de remplissage fonctionnant selon le principe de radar

(30) Priorität: 01.03.2012 DE 102012003943
(43) Veröffentlichungstag der Anmeldung: 04.09.2013
(73) Patentinhaber: Krohne Messtechnik GmbH, 47058 Duisburg (DE)
(72) Erfinder: Pohl, Nils, Prof. Dr.-Ing, 44801 Bochum (DE); Deilmann, Michael, Dr.-Ing., 45257 Essen (DE); Gerding, Michael, Dr.-Ing., 44805 Bochum (DE)
(74) Vertreter: Gesthuysen Patent- und Rechtsanwälte

(56) Entgegenhaltungen:
- EP-A1- 0 645 835
- WO-A1-2010/136276
- GB-A- 2 145 576
- US-A- 5 115 218
- US-A1- 2011 221 629

## Beschreibung

Die Erfindung betrifft ein Mikrowellenfenster zur räumlichen Trennung und mikrowellenmäßigen Verbindung eines ersten Raumes von bzw. mit einem zweiten Raum, mit einer zwei einander gegenüberliegende Seiten aufweisenden zumindest teilweise mikrowellendurchlässigen Scheibe. Ferner betrifft die Erfindung ein nach dem Radar-Prinzip arbeitendes Füllstandmesssystem mit mindestens einer eine elektromagnetische Strahlung abstrahlenden Antenne.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks oder Silos zu bestimmen. Das durch die Messgeräte umgesetzte Laufzeitverfahren baut auf der physikalischen Gesetzmäßigkeit, dass die Laufstrecke z. B. eines elektromagnetischen Signals gleich dem Produkt aus Laufzeit und Ausbreitungsgeschwindigkeit ist. Im Fall einer Messung des Füllstands eines Mediums - beispielsweise einer Flüssigkeit oder eines Schüttguts - in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums". Der Füllstand lässt sich aus der Differenz zwischen dem bekannten Abstand der Antenne zum Boden des Behälters und dem durch die Messung bestimmten Abstand der Oberfläche des Mediums zur Antenne berechnen. Bei den gesendeten und empfangenen elektromagnetischen Signalen handelt es sich zumeist um Mikrowellenstrahlung.

Je nach der Art des Mediums oder den herrschenden Prozessbedingungen können in den Behältern Unter- oder sehr hohe Überdrücke, sehr niedrige oder sehr hohe Temperaturen herrschen, weiter können die Medien sehr aggressiv und/oder korrosiv sein. Zumeist ist es auch erforderlich, dass die Behälter abgedichtet sind, so dass die Medien nicht in die Umwelt entweichen können. Um solchen generellen und speziell auch für die ggf. empfindlichen Bestandteile der Messgeräte (z. B. die Temperaturempfindlichkeit der Elektronikkomponenten) relevanten Sicherheitsaspekten zu genügen, sind im Stand der Technik die eingangs genannten Mikrowellenfenster bekannt. Solche Fenster bestehen vorzugsweise beim Vorliegen hoher Drücke aus einem Glas oder einer Keramik, z. B. Meta-, Quarz oder Borsilikatglas oder bei reduzierter erforderlicher Druckfestigkeit aus Kunststoffen wie Polypropylen, Polytetrafluorethen oder Polyetheretherketon (PEEK).

Die DE 195 42 525 C2 beschreibt ein Mikrowellenfenster, das innerhalb eines Hohlwellenleiters angeordnet ist. Solche Hohlwellenleiter dienen im Allgemein der Übertragung der elektromagnetischen Signale zwischen einer die Signale erzeugenden bzw. empfangene Signale verarbeitenden Elektronikeinheit und der abstrahlenden bzw. empfangenden Antenne. Das Mikrowellenfenster bewirkt zum einen eine druck- und diffusionsdichte Trennung zwischen dem Innenraum des Behälters und dem Außenraum und zum anderen eine Übertragung der Mikrowellen zwischen den Räumen.

In der DE 43 36 494 A1 ist eine Messanordnung beschrieben, in der das Messgerät komplett außerhalb des Behälters angeordnet ist und in der ein dem Durchgang der Mikrowellen zwischen Außenraum und Behälterinnenraum dienendes Mikrowellenfenster in die Behälterwand eingesetzt ist.

Problematisch an den vorgenannten Mikrowellenfenstern ist die an ihnen auftretende Reflexion der Wellen. Um solche Reflexionen zu reduzieren, wird beispielsweise die Fensterdicke gleich einem ungeradzahligen Vielfachen der Hälfte der Wellenlänge des für die Messung ausgesendeten Messsignals gewählt, so dass die reflektierten Wellen sich destruktiv überlagern. In der DE 43 36 494 A1 ist eine Dämpfungsschicht vorgesehen, die das Messsignal und die reflektierten Signale dämpft, die jedoch das reflektierte Signal stärker dämpft, da es mehrere Reflexionen erfährt. Eine weitere Variante besteht darin, auf die Scheibe des Fensters eine Anpassschicht aufzubringen, durch die eine destruktive Interferenz der reflektierten Wellen erzielt werden soll. Um dies zu erreichen, muss die Dicke der Anpassschicht gleich einem ungeradzahligen Vielfachen des Viertels der Wellenlänge des Messsignals sein.

Die Permittivitätszahl der Anpassschicht sollte zudem gleich dem geometrischen Mittel der Permittivitätszahlen der an die Anpassschicht angrenzenden Medien sein. Für den Fall von zwei an die Anpassschicht angrenzenden Medien bedeutet dies, dass die Permittivitätszahl der Anpassschicht gleich der Quadratwurzel aus dem Produkt der Permittivitätszahlen der beiden angrenzenden Medien ist. Nachteilig an solchen Anpass- oder Dämpfungsschichten ist der erhöhte Aufwand in Bezug auf Herstellung und Aufbringung auf die Scheiben und auch die Erfordernis, dass diese Schichten ebenfalls für die Anwendungsbedingungen geeignet sein müssen
WO2010/136276 offenbart ein Mikrowellenfenster nach dem Oberbegriff des Anspruchs 1. Der Erfindung liegt daher die Aufgabe zugrunde, ein Mikrowellenfenster und ein damit versehenes Füllstandmesssystem vorzuschlagen, die eine alternative Verringerung der Reflexion von Wellen ermöglichen.

Die aufgezeigte Aufgabe ist erfindungsgemäß durch ein Mikrowellenfenster nach Anspruch 1 gelöst. Die Scheibe des erfindungsgemäßen Mikrowellenfensters verfügt über Vertiefungen, wobei der Bereich der Scheibe unterhalb der Vertiefungen die Mikrowellenstrahlung passieren lässt und die seitlich an die durch die Vertiefungen geschwächte Schicht des Mikrowellenfensters als Anpassschicht zur Reduktion der Reflexion dient. Die Permittivitätszahl der durch die Vertiefungen gebildeten Anpassschicht ist geringer als die der darunter liegenden, vertiefungsfreien Schicht der Linse und ist abhängig von der Dimensionierung der Vertiefungen und von dem Verhältnis des Flächenanteils von Vertiefungen zu nicht durch Vertiefungen geschwächten Flächenanteil. Für die Vorgabe der Form der Vertiefungen können beispielsweise Simulationen verwendet werden. Ein Vorteil besteht darin, dass die Anpassschicht, die sich aus den Vertiefungen als eine Art Verdünnung der Scheibe ergibt, integraler Bestandteil des Mikrowellenfensters ist. Die Vertiefungen können dabei mechanisch oder chemisch in eine massive Scheibe eingebracht werden oder die Scheibe wird bereits mit den Vertiefungen hergestellt, z. B. gegossen.

Die sich durch die Vertiefungen ergebende Anpassungsschicht ist für hindurchtretende elektromagnetische Strahlung praktisch dann homogen, wenn die Abmessungen der Vertiefungen, also die in der Oberfläche realisierten Strukturen, klein sind im Vergleich zur Wellenlänge der elektromagnetischen Strahlung, die durch das Mikrowellenfenster zu übertragen ist. Wenn die Vertiefung wenigstens in einer Richtung in der Ebene des Mikrowellenfensters eine Abmessung aufweisen, die kleiner ist als die Wellenlänge einer durch das Mikrowellenfenster zu übertragenden elektromagnetischen Strahlung, dann weist das Mikrowellenfenster jedenfalls in dieser Richtung die gewünschte Filtereigenschaft auf; derart lassen sich Polarisationseffekte erzielen.

Eine Ausgestaltung sieht vor, dass die mit Vertiefungen versehene Fläche betragsmäßig verschieden ist von der vertiefungsfreien Fläche, also größer oder kleiner ist. Die Schicht, die durch die Tiefe der Vertiefungen bestimmt ist, verfügt über zwei unterschiedliche Flächen: einmal die Bereiche mit Vertiefungen, d. h. der Raum, der frei vom Material der Scheibe ist, und dann die Bereiche, die zwischen den Vertiefungen befindlich sind. Die Ausgestaltung sieht vor, dass die Fläche der Vertiefungen größer ist als die übrige Fläche der betrachteten Seite der Scheibe. In dieser Ausgestaltung überwiegt insgesamt in der betrachteten Schicht der Raum, der frei vom Material der Scheibe ist. Die Dimensionierungen ergeben sich dabei in Abhängigkeit von der Materialbeschaffenheit der Scheibe und auch von der Wellenlänge der verwendeten Mikrowellensignale.

Wenn ein Flächenanteil x des Mikrowellenfensters bzw. der Anpassungsschicht durch die Vertiefung bzw. die Vertiefungen ausgedünnt ist und demzufolge der Flächenanteil (1-x) des Mikrowellenfensters aus Stegen besteht, dann ergibt sich die effektive Permittivität der Anpassungsschicht näherungsweise zu *ε_{eff}* = *x·εᵥ* + (1-*x*)·*εₘ*, wobei *εᵥ* die Permittivität des durch die Vertiefung geschaffenen Volumens ist und wobei *εₘ* die Permittivität des noch vorhandenen Fenstermaterials ist. Wenn die Vertiefungen einfach mit Umgebungsluft ausgefüllt sind, ist *εᵥ* praktisch gleich 1. In diesem Fall sollte aufgrund des an sich bekannten und oben dargestellten Zusammenhangs für Anpassungsschichten die Permittivität *ε_{eff}* der Anpassungsschicht gleich der Quadratwurzel aus dem Produkt der Permittivitäten des Materials der Stege des Mikrowellenfensters bzw. des Mikrowellenfensters und der Permittivität der Vertiefungen sein, sollte also die relative effektive Permittivität der Anpassungsschicht gleich der Quadratwurzel aus der relativen Permittivität des Materials der Stege sein. Ist das Material des Mikrowellenfensters beispielsweise Borsilikatglas mit einer relativen Permittivität von *εₘ* = 5,4, dann ergibt sich bei *εᵥ* = 1 ein erforderlicher Flächenanteil x der Vertiefungen von recht genau x = 70%. Die Dicke der Anpassungsschicht muss ein Viertel der Wellenlänge der zu übertragenden und in dem Material der Scheibe geführten elektromagnetischen Strahlung sein.

Eine Ausgestaltung, die nicht Teil der Erfindung ist, sieht vor, dass zumindest ein Teil der Vertiefungen in Form von Schlitzen ausgestaltet ist. Dabei ist zumindest ein Teil der schlitzförmigen Vertiefungen im Wesentlichen parallel zueinander auf der Seite, die die Vertiefungen trägt, angeordnet. Die Länge, Breite und Tiefe der Schlitze kann nach den Gegebenheiten und Erfordernissen der Anwendung, z. B. das Material der Scheibe, die verwendete Wellenlänge der Messsignale, das Maß der Reduktion der Reflexion, die Bandbreite der Messsignal usw. angepasst werden. In einer Ausgestaltung erstrecken sich die Schlitze insbesondere senkrecht zur Fläche der Seite hinein in Richtung der Scheibe. Durch die parallel angeordneten schlitzförmigen Vertiefungen ergibt sich ein richtungsabhängiges Verhalten der Scheibe.

In den beiden folgenden Ausgestaltungen ist jeweils zumindest ein Teil der Vertiefungen im Wesentlichen zylindrisch ausgestaltet. Die Zylinder erstrecken sich dabei mit ihrer Längsachse insbesondere senkrecht auf der Ebene der Seite in Richtung der Scheibe. In einer Ausgestaltung, die nicht Teil der Erfindung ist, ist zumindest ein Teil der zylindrischen Vertiefungen als Punkte eines im Wesentlichen kartesischen Koordinatensystems auf der Seite angeordnet, und in der anderen Ausgestaltung ist zumindest ein Teil der zylindrischen Vertiefungen als Punkte eines im Wesentlichen hexagonalen Koordinatensystems auf der Seite angeordnet. Die zylindrischen Vertiefungen, die eine kreisförmige Grundfläche aufweisen können, sind in beiden Ausgestaltungen auf der Seite der Scheibe verteilt. Dabei unterscheiden sich beide Ausgestaltungen in der Art der Anordnung. Durch die im Wesentlichen gleichmäßige Verteilung in beiden Ausgestaltungen tritt im Wesentlichen keine Richtungsabhängigkeit des Reflexionsverhaltens der Scheibe auf. Die Durchmesser der Löcher und deren Abstände auf der Seite lassen sich z. B. durch Simulationen optimieren. In der einen Ausgestaltung sind die Vertiefungen auf Punkten eines kartesischen bzw. rechtwinkligen Koordinatensystems und in der anderen Ausgestaltungen auf Punkten eines hexagonalen Koordinatensystems angeordnet. In einer alternativen Ausgestaltung sind die zylindrischen Vertiefungen chaotisch auf der Seite verteilt um ein möglichst isotropes Übertragungsverhalten zu erreichen.

In einer Ausgestaltung sind beide Seiten der Scheibe mit jeweils mindestens einer Vertiefung versehen. In einer Ausgestaltung verfügen auch beide Seiten über eine Vielzahl an Vertiefungen. Diese Ausgestaltung entspricht dem Fall, dass die Scheibe beidseitig mit einer Anpassschicht versehen ist.

In einer Ausgestaltung ist zusätzlich auf mindestens einer Seite der Scheibe noch eine zusätzliche Abdeckschicht vorgesehen, die in einer Variante zumindest teilweise in der mindestens einen Vertiefung angeordnet und in einer anderen Variante die mindestens eine Vertiefung bzw. die Vertiefungen ausspart.

Weiterhin wird die zuvor hergeleitete und aufgezeigte Aufgabe in einer weiteren Lehre der Erfindung bei einem eingangs genannten nach dem Radar-Prinzip arbeitenden Füllstandmesssystem dadurch gelöst, dass das Füllstandmesssystem mindestens ein Mikrowellenfenster nach einer der obigen Ausgestaltungen aufweist. Das Mikrowellenfenster ist dabei in einer Ausgestaltung Bestandteil eines Hohlwellenleiters und ist in einer anderen Ausgestaltung in dem Behälter eingebaut, in dem sich Medium und außerhalb dessen sich die weiteren Bestanteile des eigentlichen Messgerätes, wie Antenne, Wellenleiter oder Elektronikkomponenten befinden.

Eine Ausgestaltung des Füllstandmesssystems besteht darin, dass die Tiefe der mindestens einen Vertiefung im Wesentlichen gleich einem Viertel der Wellenlänge der von der Antenne abgestrahlten elektromagnetischen Strahlung ist. Entspricht die Tiefe der Vertiefung einem Viertel der Wellenlänge der als Messsignal abgestrahlten elektromagnetische Strahlung, so beträgt die Dicke der an die Vertiefung angrenzenden Bereiche der Scheibe ebenfalls ein Viertel der Wellenlänge, weshalb es bei den reflektierten Wellen zu einer destruktiven Interferenz kommt und aus Gründen der Energieerhaltung ein höherer Transmissionsgrad erzielt wird . In einer Ausgestaltung ist insbesondere die Dicke der vertiefungsfreien Schicht, die sich an die Schicht mit den Vertiefungen anschließt, gleich einem Vielfachen der halben Wellenlänge der Messsignale.

Im Einzelnen gibt es eine Vielzahl von Möglichkeiten, das erfindungsgemäße Mikrowellenfenster und das erfindungsgemäße Füllstandmessgerät auszugestalten und weiterzubilden. Dazu wird verwiesen einerseits auf die den Patentansprüchen 1-7 nachgeordneten Patentansprüche, andererseits auf die folgende Beschreibung von Ausführungsbeispielen in Verbindung mit der Zeichnung. In der Zeichnung zeigen
- Fig. 1: eine schematische und nicht maßstäbliche Darstellung einer Füllstandmessung mit einem erfindungsgemäßen Füllstandmesssystem,
- Fig. 2: ein nicht maßstabsgerechter Schnitt durch eine schematische, die Anordnung der Struktur verdeutlichende Darstellung einer Scheibe eines erfindungsgemäßen Mikrowellenfensters,
- Fig. 3: eine Draufsicht auf eine nicht maßstäbliche Scheibe eines erfindungsgemäßen Mikrowellenfensters einer ersten Variante,
- Fig. 4: eine Draufsicht auf eine nicht maßstäbliche Scheibe eines erfindungsgemäßen Mikrowellenfensters einer zweiten Variante und
- Fig. 5: eine Draufsicht auf eine nicht maßstäbliche Scheibe eines erfindungsgemäßen Mikrowellenfensters einer dritten Variante.

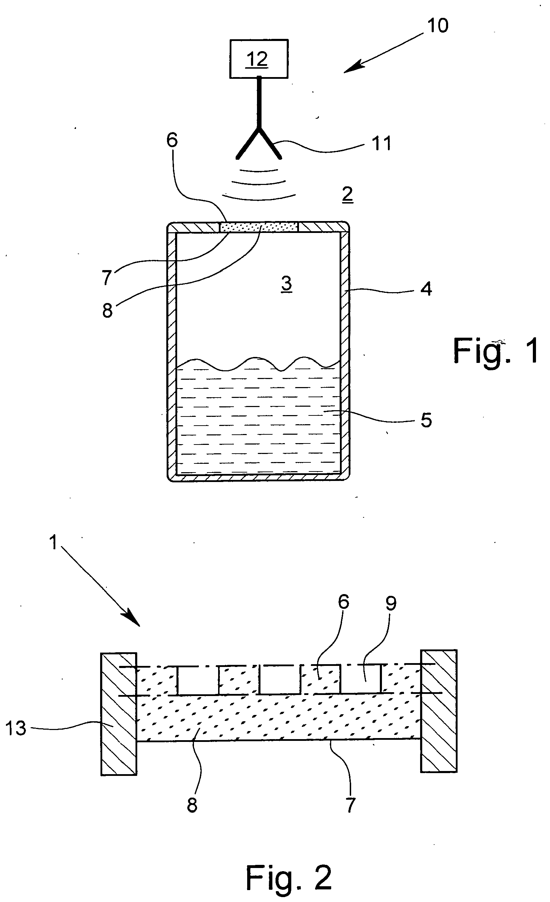

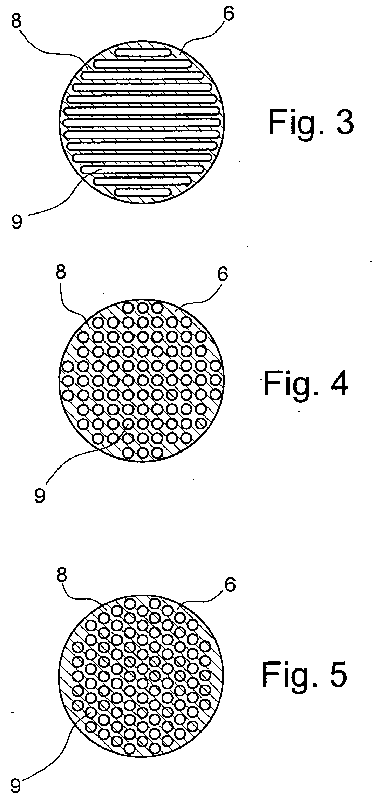

In der Fig. 1 ist ein Messanordnung schematisch dargestellt. Ein Schnitt durch ein schematisch dargestelltes, für eine solche Messung verwendetes Mikrowellenfenster zeigt die Fig. 2. In den Figuren Fig. 3 bis Fig. 5 ist jeweils die Grundform einer Variante der Scheiben der erfindungsgemäßen Mikrowellenfenster verdeutlicht.

Die Fig. 1 zeigt, wie ein erfindungsgemäßes Mikrowellenfenster 1 zwischen einem ersten Raum 2 und einem zweiten Raum 3 angeordnet ist. Der zweite Raum 3 ist dabei der Innenraum, der von einem Behälter 4 umfasst wird und in dem sich ein Medium 5 befindet. Der erste Raum 2 ist die Umwelt um den Behälter 4 herum. Das Mikrowellenfenster 1 weist zwei Seiten 6, 7 auf, wobei eine Seite 6 dem ersten Raum 2, d. h. hier der Umwelt, und die andere Seite 7 dem Innenraum des Behälters 4, also dem zweiten Raum 3 zugewandt ist. Der Durchgang für die für die Messung des Füllstands des Mediums 5 verwendeten Mikrowellen, d. h. des Messsignals, wird durch die Scheibe 8 geschaffen, die beispielsweise aus einem Glas, einer Keramik oder einem Kunststoff besteht und durchlässig für Mikrowellen ist. Das Mikrowellenfenster 1 ist Teil des Messsystems 10 mit dem komplett außerhalb des Behälters 4 angeordneten eigentlichen Messgerät, das hier dargestellt ist mit einer Antenne 11 und einer Elektronikkomponente 12. Das Messsystem 10 besteht daher insgesamt aus einer separaten Messapparatur und dem Fenster 1, das in den Behälter 4 eingebracht ist. Die von der Antenne 11 als Messsignal abgestrahlte elektromagnetische Strahlung, bei der es sich insbesondere um Mikrowellen handelt, gelangt durch das Mikrowellenfenster 1 in den zweiten Raum 3 im Behälter 4. Die an der Oberfläche des Mediums 5 reflektierten Mikrowellensignal treten umgekehrt wieder durch das Mikrowellenfenster 1 in den ersten, den Behälter 4 umgebenden Raum 2 hinaus, um von der Antenne 11 empfangen und von der Elektronikkomponente 12 ausgewertet oder weiterverarbeitet zu werden. Ist das Mikrowellenfenster 1 insbesondere druck- und diffusionsdicht ausgestaltet, so werden der erste Raum 2 und der zweite Raum 3 voneinander getrennt, sind aber hinsichtlich der Mikrowellensignale miteinander verbunden.

In der Fig. 2 ist ein Schnitt durch eine schematische Scheibe 8 eines erfindungsgemäßen Mikrowellenfensters 1 dargestellt. Die Scheibe 8 ist dabei in dieser Variante durch eine metallische Halterung 13 eingefasst. Die Größenverhältnisse und die Anzahl der Vertiefungen 9 sind rein exemplarisch gewählt, um den prinzipiellen Aufbau zu verdeutlichen. Die Scheibe 8 verfügt auf einer Seite 6 über drei Vertiefungen 9 oder Ausdünnungen, die hier in der Form von rechteckigen Aussparungen gegeben sind. Die Tiefe der Vertiefungen 9 definiert die Höhe der Abschnitte der Scheibe 2, um die die vertiefungsfreie Schicht überragt werden und die insgesamt als Anpassschicht fungieren. Für die Reduktion der Reflexion sollte die Tiefe gleich einem ungradzahligen Vielfachen des Viertels der Wellenlänge der Messsignale sein. Weiterhin ist die Dicke der vertiefungsfreien Schicht gleich einem ganzzahligen Vielfachen der halben Wellenlänge. Beide Ausgestaltungen reduzieren einzeln oder zusammen die Reflexion an der Scheibe 8. In einer Ausgestaltung befinden sich auf der anderen Seite 7 ebenfalls Vertiefungen.

Die Figuren Fig. 3 bis Fig. 5 zeigen drei unterschiedliche Varianten der Ausgestaltung der Vertiefungen 9, von denen nur die Ausgestaltung der Fig. 5 erfindungsgemäss ist, bzw. deren Anordnung auf einer Seite der Scheibe 8. Die Scheibe 8 ist dabei in den dargestellten Varianten jeweils kreisförmig ausgestaltet. Weiterhin ist jeweils die Fläche der Vertiefungen 9 größer als die vertiefungsfreie Fläche der Seite 6. In der Variante der Fig. 3 sind die Vertiefungen als Schlitze ausgestaltet, die parallel zueinander angeordnet sind. Durch eine solche Rasterstruktur ergibt sich eine Abhängigkeit der Wechselwirkung zwischen der Polarisation der für die Messung verwendeten Mikrowellen und der Scheibe 8. In den Varianten der Fig. 4 und der Fig. 5 sind die Vertiefungen 9 jeweils Zylinder mit im Wesentlichen kreisförmiger Grundfläche. Die Längsachsen der Zylinder verlaufen insbesondere senkrecht zur Fläche der Seite 6, in der sich die Vertiefungen 9 befinden. Die zylindrischen Vertiefungen 9 der Varianten der Fig. 4 und Fig. 5 sind jeweils auf Punkten eines jeweils mit einheitlicher Schrittweite aufgespannten Koordinatensystems, das einmal kartesisch (Fig. 4) und einmal hexagonal (Fig. 5) ist, angeordnet. Dadurch entfällt die deutlische Abhängigkeit von der Orientierung wie in der Variante gemäß der Fig. 3.

## Patentansprüche

1. Mikrowellenfenster (1) zur räumlichen Trennung und mikrowellenmäßigen Verbindung eines ersten Raumes (2) von bzw. mit einem zweiten Raum (3), mit einer zwei einander gegenüberliegende Seiten (6, 7) aufweisenden zumindest teilweise mikrowellendurchlässigen Scheibe (8), wobei die Scheibe (8) auf mindestens einer Seite (6) mehrere Vertiefungen aufweist,
**dadurch gekennzeichnet,**
**dass** zumindest ein Teil der Vertiefungen (9) zylindrisch ausgestaltet ist, wobei die zylindrischen Vertiefungen eine kreisförmige Grundfläche aufweisen, und dass zumindest ein Teil der zylindrischen Vertiefungen (9) als Punkte eines hexagonalen Koordinatensystems auf der Seite (6) angeordnet ist.

2. Mikrowellenfenster (1) nach Anspruch 1, **dadurch gekennzeichnet, dass** die mit Vertiefungen (9) versehene Fläche der Seite (6) größer ist als die vertiefungsfreie Fläche zwischen den Vertiefungen (9).

3. Mikrowellenfenster (1) nach Anspruch 1, **dadurch gekennzeichnet, dass** die mit Vertiefungen (9) versehene Fläche der Seite (6) kleiner ist als die vertiefungsfreie Fläche zwischen den Vertiefungen (9).

4. Mikrowellenfenster (1) nach einem der Ansprüche 1 bis 3, **dadurch gekennzeichnet, dass** die Vertiefung (9) wenigstens in einer Richtung in der Ebene des Mikrowellenfensters (1) eine Abmessung aufweist, die kleiner ist als die Wellenlänge einer durch das Mikrowellenfenster (1) zu übertragenden elektromagnetischen Strahlung.

5. Mikrowellenfenster (1) nach einem der Ansprüche 1 bis 4, **dadurch gekennzeichnet, dass** die Scheibe (8) auf den gegenüberliegenden Seiten (6, 7) jeweils mindestens eine Vertiefung (9) aufweist.

6. Nach dem Radar-Prinzip arbeitendes Füllstandmesssystem (10), mit mindestens einer eine elektromagnetische Strahlung abstrahlenden Antenne (11), und mit mindestens einem Mikrowellenfenster (1) nach einem der Ansprüche 1 bis 5.

7. Füllstandmesssystem (10) nach Anspruch 6, **dadurch gekennzeichnet, dass** die Tiefe der mindestens einen Vertiefung (9) im Wesentlichen gleich einem Viertel der Wellenlänge der von der in der Scheibe (8) geführten elektromagnetischen Strahlung ist.

## Claims

1. Microwave window (1) for spatial separation and microwave connection of a first space (2) from or to a second space (3), having an at least partially microwave-permeable pane (8) having two opposite sides (6, 7), wherein the pane (8) has several indentations on at least one side (6),
**characterized in**
**that** at least some of the indentations (9) are cylindrical, wherein the cylindrical indentations have a circular base, and at least some of the cylindrical indentations (9) are arranged as points of a hexagonal coordinate system on the side (6).

2. Microwave window (1) according to claim 1, **characterized in that** the surface of the side (6) provided with indentations (9) is larger than the indentations-free surface between the indentations (9).

3. Microwave window (1) according to claim 1, **characterized in that** the surface of the side (6) provided with indentations (9) is smaller than the indentation-free surface between the indentations (9).

4. Microwave window (1) according to any one of claims 1 to 3, **characterized in that** the indentation (9) has a dimension at least in one direction in the plane of the microwave window (1) which is smaller than the wavelength of electromagnetic radiation to be transmitted through the microwave window (1).

5. Microwave window (1) according to any one of claims 1 to 4, **characterized in that** the pane (8) has at least one indentation (9) on each of the opposite sides (6, 7).

6. Fill level measuring system (10) operating according to the radar principle, having at least one antenna (11) emitting electromagnetic radiation, and having at least one microwave window (1) according to any one of claims 1 to 5.

7. Fill level measuring system (10) according to claim 6, **characterized in that** the depth of the at least one indentation (9) is substantially equal to one quarter of the wavelength of the electromagnetic radiation guided in the pane (8).

## Revendications

1. Fenêtre micro-ondes (1) permettant une séparation spatiale et la connexion par micro-ondes d'un premier espace (2) depuis ou vers un deuxième espace (3), comportant une vitre (8) au moins partiellement perméable aux micro-ondes présentant deux faces opposées (6, 7), dans laquelle la vitre (8) présente plusieurs évidements sur au moins une face (6),
**caractérisé en ce qu'**au moins une partie des évidements (9) sont configurés de manière cylindrique, dans lequel les évidements cylindriques présentent une surface de base circulaire, et **en ce qu'**au moins une partie des évidements cylindriques (9) sont disposés sur la face (6) sous la forme de points d'un système de coordonnées hexagonal.

2. Fenêtre micro-ondes (1) selon la revendication 1, **caractérisée en ce que** la surface de la face (6) pourvue d'évidements (9) est supérieure à la surface sans évidements entre les évidements (9).

3. Fenêtre micro-ondes (1) selon la revendication 1, **caractérisée en ce que** la surface de la face (6) pourvue d'évidements (9) est inférieure à la surface sans évidements entre les évidements (9).

4. Fenêtre micro-ondes (1) selon l'une des revendications 1 à 3, **caractérisée en ce que** l'évidement (9) présente, au moins dans une direction se situant dans le plan de la fenêtre micro-ondes (1), une dimension qui est inférieure à la longueur d'onde du rayonnement électromagnétique devant être transmis à travers la fenêtre micro-ondes (1).

5. Fenêtre micro-ondes (1) selon l'une des revendications 1 à 4, **caractérisée en ce que** la vitre (8) présente au moins un évidement (9) sur chacune des faces opposées (6, 7).

6. Système de mesure de niveau fonctionnant selon le principe du radar (10), comportant au moins une antenne (11) émettant un rayonnement électromagnétique et au moins une fenêtre micro-ondes (1) selon l'une des revendications 1 à 5.

7. Système de mesure de niveau (10) selon la revendication 6, **caractérisé en ce que** la profondeur d'au moins un évidement (9) est sensiblement égale à un quart de la longueur d'onde du rayonnement électromagnétique guidé dans la vitre (8).
